# EUROPÄISCHE PATENTANMELDUNG

(11) **EP 4 279 724 A1**
(43) Veröffentlichungstag der Anmeldung: **22.11.2023**
(21) Anmeldenummer: 22174282.8
(22) Anmeldetag: 19.05.2022
(51) Int. Cl.: F02C 6/12, F01D 25/16, F01D 25/24, F01D 25/12, F01D 25/14

(54) **TURBOMASCHINE MIT HITZESCHILD UND VERFAHREN ZUR WÄRMEEINTRAGSREDUKTION UND ABFUHR VON EINGEBRACHTER WÄRME VON EINER TURBINENSEITE IN EIN LAGERGEHÄUSE EINER TURBOMASCHINE**

(71) Anmelder: Turbo Systems Switzerland Ltd., 5400 Baden (CH)
(72) Erfinder: Geist, Nico, 79872 Bernau im Schwarzwald (DE); Maurer, Florian, 5400 Baden (CH); Behrendt, Detlef, 79790 Rheinheim (DE)
(74) Vertreter: Zimmermann & Partner Patentanwälte mbB

(57) **Zusammenfassung**

Die Erfindung betrifft eine Turbomaschine (10), insbesondere eine Abgasturbine. Die Turbomaschine umfasst eine in einem Lagergehäuse (11) gelagerte Welle (12), auf der ein Turbinenrad (13) angeordnet ist. Ferner umfasst die Turbomaschine ein Hitzeschild (14), das zwischen dem Lagergehäuse (11) und dem Turbinenrad (13) angeordnet ist. Das Hitzeschild (14) ist über mehrere Befestigungsmittel (15) an dem Lagergehäuse (11) befestigt. Die Befestigungsmittel (15) erstrecken sich in Kühlstrukturen (16), die in einem Ölkühlraum (111) des Lagergehäuses (11) angeordnet sind. Des Weiteren betrifft die Erfindung ein Verfahren zur Wärmeeintragsreduktion und Abfuhr von eingebrachter Wärme von einer Turbinenseite in ein Lagergehäuse einer Turbomaschine.

## Beschreibung

### TECHNISCHES GEBIET

Die Erfindung bezieht sich auf das Gebiet der Turbomaschinen, insbesondere Abgasturbinen. Insbesondere betrifft die Erfindung eine Turbomaschine mit einem Hitzeschild, welches zwischen einem Lagergehäuse und einem Turbinenrad der Turbomaschine angeordnet ist. Des Weiteren betrifft die Erfindung ein Verfahren zur Wärmeeintragsreduktion und Abfuhr von eingebrachter Wärme von einer Turbinenseite in ein Lagergehäuse einer Turbomaschine.

### TECHNISCHER HINTERGRUND

Für die Leistungssteigerung einer Brennkraftmaschine werden heutzutage standardmäßig Abgasturbolader eingesetzt, mit einer Turbine im Abgastrakt der Verbrennungskraftmaschine und mit einem der Verbrennungskraftmaschine vorgelagerten Verdichter. Die Abgase der Brennkraftmaschine werden dabei in der Turbine entspannt. Die dabei gewonnene Arbeit wird mittels einer Welle auf den Verdichter übertragen, welcher die der Brennkraftmaschine zugeführte Luft verdichtet. Durch die Verwendung der Energie der Abgase zur Verdichtung der dem Verbrennungsprozess in der Brennkraftmaschine zugeführten Luft, können der Verbrennungsprozess und der Wirkungsgrad der Brennkraftmaschine optimiert werden.

In Turbomaschinen, insbesondere in Abgasturboladern, kommen häufig sogenannte Hitzeschilder zur Anwendung. Hitzeschilder haben die primäre Aufgabe den Wärmeeintrag von der Turbinenseite in das Lagergehäuse zu reduzieren. Zusätzlich kann das Hitzeschild neben der Wärmeabschirmung auch Nebenfunktionen wie Strömungsführung oder Heiß-Zentrierung des Turbinengehäuses beinhalten.

Für die Ausführung der Hitzeschilder gibt es zwei unterschiedliche Varianten. Zum einen werden die Hitzeschilder als massive zerspante und teilweise gegossenen Bauteile gestaltet, zum anderen kommen auch Ausführungen aus Blechumformteilen zur Anwendung. Beide Varianten werden üblicherweise am äußeren Umfang geklemmt.

Es hat sich herausgestellt, dass die aus dem Stand der Technik bekannten Hitzeschilder noch verbessert werden können, insbesondere hinsichtlich ihrer Austauschbarkeit, Montierbarkeit, und modularer Einsetzbarkeit bei verschiedenen Varianten von Abgasturboladern mit limitierten Hitzeschildbauraum.

Die Aufgabe der vorliegenden Erfindung besteht darin, eine Turbomaschine mit einem Hitzeschild bereitzustellen, mit welcher ein oder mehrere aus dem Stand der Technik bekannten Nachteile teilweise oder vollständig überwunden werden können.

### KURZE DARSTELLUNG DER ERFINDUNG

Zur Lösung der obengenannten Aufgaben werden eine Turbomaschine und ein Verfahren zur Wärmeeintragsreduktion und Abfuhr von eingebrachter Wärme von einer Turbinenseite in ein Lagergehäuse einer Turbomaschine gemäß den unabhängigen Ansprüchen bereitgestellt. Weitere Aspekte, Vorteile und Merkmale der vorliegenden Erfindung sind den abhängigen Patentansprüchen, der Beschreibung und den beiliegenden Figuren zu entnehmen.

Gemäß einem Aspekt der Erfindung wird eine Turbomaschine, insbesondere eine Abgasturbine, bereitgestellt. Die Turbomaschine umfasset eine in einem Lagergehäuse gelagerte Welle, auf der ein Turbinenrad angeordnet ist. Ferner umfasst die Turbomaschine ein Hitzeschild, welches zwischen dem Lagergehäuse und dem Turbinenrad angeordnet ist. Das Hitzeschild ist über mehrere Befestigungsmittel an dem Lagergehäuse befestigt. Die Befestigungsmittel erstrecken sich in Kühlstrukturen, die in einem Ölkühlraum des Lagergehäuses angeordnet sind.

Somit wird vorteilhafterweise eine Turbomaschine mit einem Hitzeschild bereitgestellt, welches gegenüber aus dem Stand der Technik bekannten Hitzeschilder verbessert ist. Insbesondere kann durch die hierin beschriebenen Ausführungsformen der Wärmeeintrag von einer Turbinenseite in ein Lagergehäuse der Turbomaschine verringert werden. Des Weiteren ermöglichen die hierin beschriebenen Ausführungsformen eine verbesserte Abfuhr von eingebrachter Wärme von einer Turbinenseite in ein Lagergehäuse einer Turbomaschine.

Ein zweiter Aspekt der Erfindung betrifft ein Verfahren zur Wärmeeintragsreduktion und Abfuhr von eingebrachter Wärme von einer Turbinenseite in ein Lagergehäuse einer Turbomaschine, insbesondere einer Abgasturbine. Das Verfahren umfasst ein thermisches Abschirmen des Lagergehäuses gegenüber der Turbinenseite mittels eines Hitzeschilds. Das Hitzeschild ist zwischen dem Lagergehäuse und einem Turbinenrad angeordnet. Ferner umfasst das Verfahren ein Abführen von Wärme über mehrere Befestigungsmittel, mit welchen das Hitzeschild an dem Lagergehäuse befestigt ist, wobei sich die Befestigungsmittel in Kühlstrukturen erstrecken, die in einem Ölkühlraum des Lagergehäuses angeordnet sind.

### KURZBESCHREIBUNG DER FIGUREN

Im Weiteren soll die Erfindung anhand von in Figuren dargestellten Ausführungsbeispielen erläutert werden, aus denen sich weitere Vorteile und Abwandlungen ergeben. Hierbei zeigen:
- Figur 1: eine schematische Schnittansicht einer Turbomaschine gemäß hierin beschriebenen Ausführungsformen;
- Figur 2A: eine schematische Draufsicht auf eine Lagergehäuseseite eines Hitzeschilds gemäß hierin beschriebenen Ausführungsformen;
- Figur 2B: eine Detailansicht aus Figur 2A;
- Figur 3A: eine schematische dreidimensional Ansicht eine Lagergehäuseseite eines Hitzeschilds gemäß hierin beschriebenen Ausführungsformen;
- Figur 3B: eine schematische dreidimensional Ansicht eine Turbinenseite eines Hitzeschilds gemäß hierin beschriebenen Ausführungsformen; und
- Figur 4: ein Blockdiagramm zur Veranschaulichung eines Verfahrens zur Wärmeeintragsreduktion und Abfuhr von eingebrachter Wärme von einer Turbinenseite in ein Lagergehäuse einer Turbomaschine.

### DETAILLIERTE BESCHREIBUNG DER FIGUREN

Im Folgenden werden verschiedenen Ausführungsformen beschrieben, von denen in jeder Abbildung ein oder mehrere Beispiele dargestellt sind. Jedes Beispiel dient der Erläuterung und ist nicht als Einschränkung zu verstehen. Beispielsweise können Merkmale, die als Teil einer Ausführungsform dargestellt oder beschrieben sind, auf oder in Verbindung mit jeder anderen Ausführungsform verwendet werden, um eine weitere Ausführungsform zu erhalten. Es ist beabsichtigt, dass die vorliegende Offenlegung solche Modifikationen und Variationen einschließt.

In der folgenden Beschreibung der Zeichnungen beziehen sich die gleichen Referenznummern auf die gleichen oder ähnlichen Komponenten. Im Allgemeinen werden nur die Unterschiede in Bezug auf die einzelnen Ausführungsformen beschrieben. Sofern nicht anders angegeben ist, kann sich die Beschreibung eines Teils oder Aspekts in einer Ausführungsform auch auf ein entsprechendes Teil oder einen entsprechenden Aspekt in einer anderen Ausführungsform beziehen.

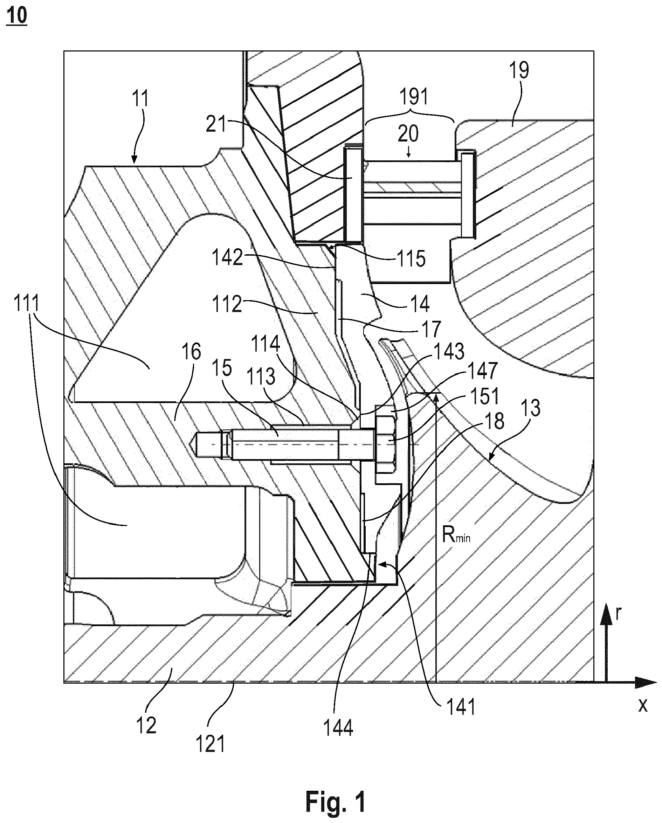

Mit Bezugnahme auf Figur 1 wird eine Turbomaschine 10 gemäß Ausführungsformen der vorliegenden Offenbarung beschrieben. Insbesondere kann die Turbomaschine 10 ein Abgasturbolader sein. Ferner wird darauf hingewiesen, dass in Figur 1 die axiale Richtung x und die radiale Richtung r, auf die im Folgenden Bezug genommen wird, beispielshaft eingezeichnet sind.

Gemäß einer Ausführungsform, die mit anderen hierin beschriebenen Ausführungsformen kombiniert werden kann, umfasst die Turbomaschine 10 eine in einem Lagergehäuse 11 gelagerte Welle 12, auf der ein Turbinenrad 13 angeordnet ist. Des Weiteren umfasst die Turbomaschine 10 ein Hitzeschild 14, welches zwischen dem Lagergehäuse 11 und dem Turbinenrad 13 angeordnet ist. Das Hitzeschild 14 ist über mehrere Befestigungsmittel 15 an dem Lagergehäuse befestigt. Die Befestigungsmittel 15 erstrecken sich in Kühlstrukturen 16, die in einem Ölkühlraum 111 des Lagergehäuses 11 angeordnet sind. Somit kann vorteilhafterweise der Wärmeeintrag von der Turbinenseite in das Lagergehäuse reduziert werden und die eingebrachte Wärme kontrolliert in das Lagergehäuse, insbesondere in die Kühlstrukturen, abgeführt werden.

Gemäß einer Ausführungsform, die mit anderen hierin beschriebenen Ausführungsformen kombiniert werden kann, sind die Kühlstrukturen 16, die in dem Ölkühlraum 111 des Lagergehäuses 11 angeordnet sind, Stege. Beispielseise können die Kühlstrukturen 16 axiale Stege sein. Mit anderen Worten die Kühlstrukturen erstrecken sich in einer im Wesentlichen axialen Richtung in dem Ölkühlraum 111. Unter einer "im Wesentlichen axialen Richtung" ist eine Richtung mit einer Winkeltoleranz T von T≤±20°, insbesondere T≤±10°, von der axialen Richtung zu verstehen. Wie es in Figur 1 beispielhaft dargestellt ist, verläuft die axiale Richtung x typischerweise entlang der Rotationsachse 121 der Welle 12, auf welcher das Turbinenrad 13 angeordnet ist, wie es beispielsweise in Figur 1 eingezeichnet ist.

Gemäß einer Ausführungsform, die mit anderen hierin beschriebenen Ausführungsformen kombiniert werden kann, sind die Kühlstrukturen 16 mit einer turbinenseitigen Lagergehäusewand 112 verbunden, wie es beispielhaft in Figur 1 dargestellt ist. Insbesondere können die Kühlstrukturen integral mit der turbinenseitigen Lagergehäusewand 112 ausgebildet sein. Typischerweise erstrecken sich die Befestigungsmittel 15 durch die turbinenseitigen Lagergehäusewand 112 kontaktfrei.

Gemäß einer Ausführungsform, die mit anderen hierin beschriebenen Ausführungsformen kombiniert werden kann, weist die turbinenseitige Lagergehäusewand 112 gewindefreie Befestigungsmittelaufnahmen 113 auf, durch die sich die Befestigungsmittel 15 kontaktfrei erstrecken, wie es beispielhaft in Figur 1 dargestellt ist. Typischerweise erstrecken sich die gewindefreien Befestigungsmittelaufnahmen 113 in einer im Wesentlichen axialen Richtung. Beispielsweise können die gewindefreie Befestigungsmittelaufnahmen 113 Bohrungen sein, durch die sich die Befestigungsmittel 15 kontaktfrei erstrecken. Des Weiteren können die Befestigungsmittelaufnahmen 113 turbinenseitige Senkungen 114 aufweisen, wie es beispielsweise in Figur 1 dargestellt ist. Beispielsweise können die turbinenseitigen Senkungen 114 der Befestigungsmittelaufnahmen 113 als Kegelsenkungen oder Flachsenkungen ausgeführt sein.

Gemäß einer Ausführungsform, die mit anderen hierin beschriebenen Ausführungsformen kombiniert werden kann, sind die Befestigungsmittel 15 Schrauben, die mit in den Kühlstrukturen 16 vorgesehenen Innengewinden in Eingriff stehen. Typischerweise sind die Innengewinde ausschließlich in den Kühlstrukturen vorgesehen. Ferner können die Außengewinde der Schrauben ausschließlich in einem vorderen Endbereich der Schrauben vorgesehen sein, welche mit den Innengewinden der Kühlstrukturen in Eingriff stehen.

Es sei darauf hingewiesen, dass durch die hierin beschriebene Ausgestaltung der Befestigung, insbesondere die kontaktfreie Erstreckung der Befestigungsmittel durch die turbinenseitigen Lagergehäusewand und das Vorsehen der Gewinde im Bereich der Kühlstrukturen, der Wärmeeintrag von der Turbinenseite in das Lagergehäuse reduziert werden kann. Ferner kann vorteilhafterweise eine Länge der Schraube derart gewählt werden, dass eine Selbstsicherung der Schraube gewährleistet werden kann. Des Weiteren ermöglicht der Kontakt der Befestigungsmittel mit den Kühlstrukturen ein kontrolliertes Abführen von Wärme.

Gemäß einer Ausführungsform, die mit anderen hierin beschriebenen Ausführungsformen kombiniert werden kann, sind die Befestigungsmittel 15 zwischen Turbinenrad 13 und Lagergehäuse 11 angeordnet. Typischerweise sind die Befestigungsmittel 15 radial innerhalb eines minimalen Radius Rₘᵢₙ einer Turbinenradrückwand des Turbinenrads 13 angeordnet, wie es beispielsweise in Figur 1 dargestellt ist. Beispielsweise können die Befestigungsmittel 15 radial unterhalb des Scalloping des Turbinenrads angeordnet sein.

Gemäß einer Ausführungsform, die mit anderen hierin beschriebenen Ausführungsformen kombiniert werden kann, wird zwischen einem radial äußeren axialem Kontakt 142 des Hitzeschilds 14 mit dem Lagergehäuse 11 und einem radial inneren axialem Kontakt 143 des Hitzeschilds 14 mit dem Lagergehäuse 11 ein erster luftgefüllter Isolationsraum 17, wie es beispielhaft in Figur 1 dargestellt ist. Typischerweise ist der radial innere axiale Kontakt 143 im Bereich der Befestigungsmittel 15 angeordnet. Es wird darauf hingewiesen, dass der erster luftgefüllte Isolationsraum 17 Teil eines größeren luftgefüllten Isolationsraums sein kann. Beispielsweise kann der erster luftgefüllte Isolationsraum 17 und die im Folgenden erläuterten weiteren luftgefüllten Isolationsräume einen gemeinsamen luftgefüllten Isolationsraum bilden. Insbesondere kann der erste luftgefüllte Isolationsraum 17 zusammen mit dem zweiten luftgefüllten Isolationsraum 18 und/oder zusammen mit dem luftgefüllte Isolationsraum in Umfangsrichtung zwischen benachbarten Befestigungskontakteflächen 145 einen gemeinsamen luftgefüllten Isolationsraum bilden.

Gemäß einer Ausführungsform, die mit anderen hierin beschriebenen Ausführungsformen kombiniert werden kann, wird zwischen einem radial inneren axialem Kontakt 143 im Bereich der Befestigungsmittel 15 mit dem Lagergehäuse 11 und einem radialem Kontakt 144 einer zentralen Öffnung 141 des Hitzeschilds 14 mit dem Lagergehäuse 11 ein zweiter luftgefüllter Isolationsraum 18 bereitgestellt, wie es beispielhaft in Figur 1 dargestellt ist.

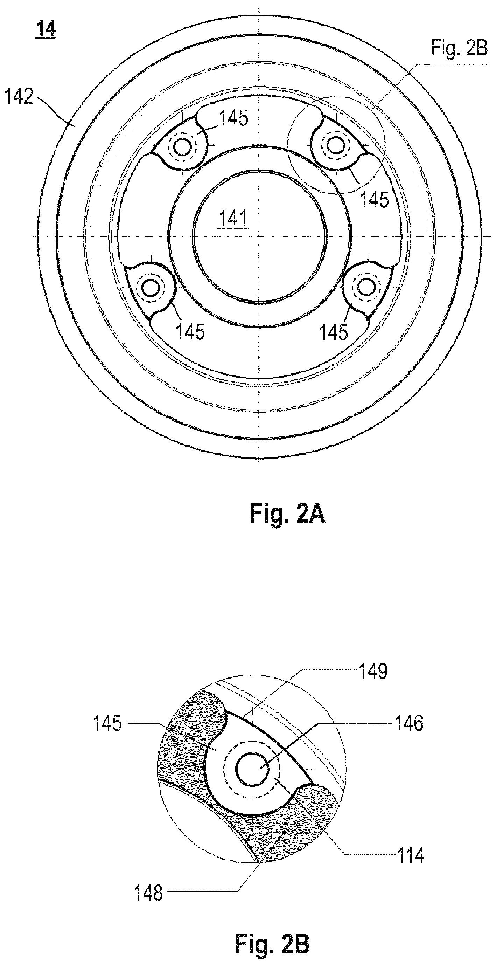

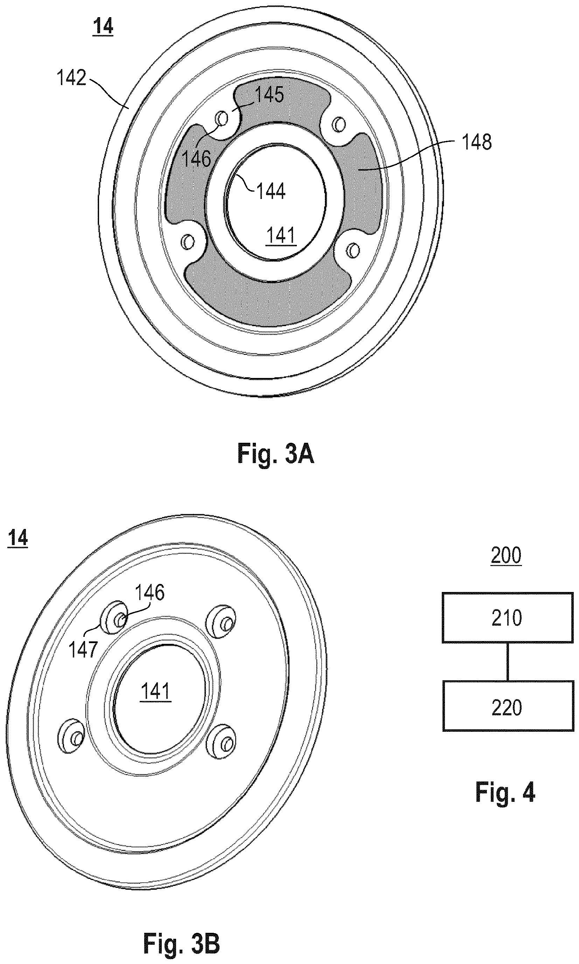

Gemäß einer Ausführungsform, die mit anderen hierin beschriebenen Ausführungsformen kombiniert werden kann, umfasst das Hitzeschild 14 lagergehäuseseitig mehrere freigestellte Befestigungskontakteflächen 145, wie es beispielsweise in den Figuren 2A und 2B dargestellt ist. Insbesondere sind die freigestellten Befestigungskontakteflächen 145 typischerweise um jeweilige Befestigungsmitteldurchgangsbohrungen 146 des Hitzeschilds herum angeordnet, so dass in Umfangsrichtung zwischen benachbarten Befestigungskontakteflächen 145 ein luftgefüllter Isolationsraum bereitgestellt wird, wie es beispielhaft in den Figuren 2A und 3A dargestellt ist. In Figur 2B sind die Freistellungen 148 der Befestigungskontaktflächen 145 eingezeichnet. Ferner ist in Figur 2B der Außendurchmesser 149 der Auflagefläche des Hitzeschilds am Lagergehäuse eingezeichnet. Typischerweise sind die Befestigungsmitteldurchgangsbohrungen 146 um die zentrale Öffnung 141 des Hitzeschilds 14 herum angeordnet. Die Mittelpunkte der Befestigungsmitteldurchgangsbohrungen 146 können auf einer gemeinsamen Kreislinie liegen. Die gemeinsame Kreislinie hat einen konstanten Radius um die zentrale Achse des Hitzeschilds. Die zentrale Achse des Hitzeschilds erstreckt sich durch die Mitte der zentralen Öffnung 141 des Hitzeschilds 14. In den Figuren ist ein beispielhafte Ausführungsform des Hitzeschilds 14 mit vier Befestigungsmitteldurchgangsbohrungen 146 gezeigt.

Es sei darauf hingewiesen, dass das Hitzeschild gemäß einer Ausführungsform die mit anderen hierin beschriebenen Ausführungsformen kombiniert werden kann, mindestens zwei Befestigungsmitteldurchgangsbohrungen aufweisen kann. Insbesondere, kann das Hitzeschild zwei, drei, vier, fünf oder mehr Befestigungsmitteldurchgangsbohrungen aufweisen. Ferner sei darauf hingewiesen, dass die Anzahl der Befestigungsmittelaufnahmen in der turbinenseitigen Lagergehäusewand typischerweise der Anzahl der Befestigungsmitteldurchgangsbohrungen des Hitzeschilds entspricht. Ebenso kann die Anzahl der Kühlstrukturen, in die sich die jeweiligen Befestigungsmittel erstrecken, der Anzahl der Befestigungsmitteldurchgangsbohrungen des Hitzeschilds entsprechen.

Beispielsweise können die Freistellungen 148 gefräst sein. Somit kann vorteilhafterweise eine Ausgestaltung der Kontaktflächen mit minimaler Auflagefläche bereitgestellt werden. Zudem wird die Kontaktauflagefläche auf den Bereich der Befestigungsmittel beschränkt, die sich in die in Kühlstrukturen erstrecken. Dadurch kann der lokal im Bereich der Befestigungskontakteflächen erhöhte Wärmeeintrag vorteilhafterweise kontrolliert in die Kühlstrukturen abgeleitet werden.

Gemäß einer Ausführungsform, die mit anderen hierin beschriebenen Ausführungsformen kombiniert werden kann, umfasst das Hitzeschild 14 einen rotationssymmetrischen, scheibenförmigen Grundkörper mit einer zentralen Öffnung 141 zum Durchführen der Welle 12, wie es beispielhaft in Figur 2A dargestellt ist. Insbesondere ist der Grundkörper des Hitzeschilds 14 derart ausgebildet, dass (abgesehen von den Befestigungsmitteldurchgangsbohrungen 146) eine geschlossene Fläche zwischen der zentralen Öffnung 141 und dem radial äußeren Rand des Hitzeschilds 14 bereitgestellt wird.

Gemäß einer Ausführungsform, die mit anderen hierin beschriebenen Ausführungsformen kombiniert werden kann, ist das Hitzeschild 14 derart konfiguriert, um eine rotationssymmetrische radial äußere Vorspannungskontaktzone bereitzustellen. Insbesondere, wird die rotationssymmetrische radial äußere Vorspannungskontaktzone durch den radial äußeren axialen Kontakt 142 des Hitzeschilds 14 mit dem Lagergehäuse 11 bereitgestellt. Durch das Vorsehen einer Vorspannungskontaktzone kann vorteilhafterweise ein Eindringen von warmer Luft zwischen Hitzeschild und Lagergehäuse, insbesondere in die hierin beschriebenen luftgefüllten Isolationsräume, verhindert werden.

Gemäß einer Ausführungsform, die mit anderen hierin beschriebenen Ausführungsformen kombiniert werden kann, weist das Hitzeschild 14 turbinenseitig für Köpfe 151 der mehreren Befestigungsmittel 15 jeweilige Senkungen 147 auf. Beispielsweise können die turbinenseitigen Senkungen 147 des Hitzeschilds zur teilweisen oder vollständigen Aufnahme von Befestigungsmittelköpfen 151, insbesondere Schraubenköpfen, ausgebildet sein. Die turbinenseitigen Senkungen 147 des Hitzeschilds sind beispielhaft in den Figuren 1 und 3B dargestellt.

Gemäß einer Ausführungsform, die mit anderen hierin beschriebenen Ausführungsformen kombiniert werden kann, weist das Lagergehäuse 11 eine Fase 115 auf, die einem lagergehäuseseitigen radial äußeren axialem Rand des Hitzeschilds 14 zugewandt ist, wie es beispielhaft in Figur 1 dargestellt ist. Alternativ oder zusätzlich kann der lagergehäuseseitige radial äußere axiale Rand des Hitzeschilds 14 eine Fase aufweisen (nicht explizit dargestellt). Das Vorsehen von einer oder mehreren Fasen ist vorteilhaft für eine verbesserte Demontierbarkeit, beispielsweise im Servicefall.

Gemäß einer Ausführungsform, die mit anderen hierin beschriebenen Ausführungsformen kombiniert werden kann, ist die Turbomaschine eine Radialturbine und umfasst ein Gaseintrittsgehäuse 19 mit einem radial angeordneten Gaseinströmungskanal 191. Wie beispielhaft in Figur 1 dargestellt ist, kann in dem radial angeordneten Gaseinströmungskanal 191 ein Düsenring angeordnet sein. Typischerweise ist ein Tragring 21 des Düsenringes(20) radial außerhalb des Hitzeschilds 14 angeordnet, wie es beispielhaft in Figur 1 dargestellt ist.

Gemäß einem weiteren Aspekt der vorliegenden Erfindung wird ein Verfahren 200 zur Wärmeeintragsreduktion und Abfuhr von eingebrachter Wärme von einer Turbinenseite in ein Lagergehäuse 11 einer Turbomaschine 10 bereitgestellt. Beispielsweise kann die Turbomaschine eine Abgasturbine sein. Insbesondere ist die Turbomaschine eine Turbomaschine gemäß einer der hierin beschriebenen Ausführungsformen. Figur 4 zeigt ein Blockdiagramm zur schematischen Veranschaulichung des Verfahrens.

Das Verfahren 200 umfasst ein thermisches Abschirmen (veranschaulicht durch den Block 210 in Figur 4) des Lagergehäuses 11 gegenüber der Turbinenseite mittels eines Hitzeschilds 14, das zwischen dem Lagergehäuse 11 und einem Turbinenrad 13 angeordnet ist. Ferner umfasst das Verfahren ein Abführen (veranschaulicht durch den Block 220 in Figur 4) von Wärme über mehrere Befestigungsmittel 15, mit welchen das Hitzeschild 14 an dem Lagergehäuse befestigt ist. Die Befestigungsmittel 15 erstrecken sich in Kühlstrukturen 16, die in einem Ölkühlraum 111 des Lagergehäuses 11 angeordnet sind.

Wie aus den hierin beschriebenen Ausführungsformen hervorgeht wird vorteilhafterweise eine Turbomaschine mit einem Hitzeschild als auch ein Verfahren zur Wärmeeintragsreduktion und Abfuhr von eingebrachter Wärme bereitgestellt, welche gegenüber dem Stand der Technik verbessert sind. Insbesondere kann eine verbesserte Austauschbarkeit, Montierbarkeit, und modularer Einsetzbarkeit bei verschiedenen Varianten von Abgasturboladern mit limitierten Hitzeschildbauraum bereitgestellt werden, wobei eine Reduktion des Wärmeeintrags und verbesserte Abfuhr von eingebrachter Wärme von einer Turbinenseite in ein Lagergehäuse einer Turbomaschine ermöglicht wird.

### BEZUGZEICHENLISTE

10 Turbomaschine
11 Lagergehäuse
111 Ölkühlraum
112 turbinenseitigen Lagergehäusewand#
113 Befestigungsmittelaufnahmen
114 Senkungen
115 Fase
12 Welle
121 zentrale Rotationsachse
13 Turbinenrad
14 Hitzeschild
141 zentrale Öffnung
142 radial äußerer axialer Kontakt
143 radial innerer axialer Kontakt
144 radialer Kontakt der zentralen Öffnung des Hitzeschilds mit dem Lagergehäuse
145 Befestigungskontakteflächen
146 Befestigungsmitteldurchgangsbohrungen
147 Senkungen
148 Freistellung
149 Außendurchmesser der Auflagefläche am Lagergehäuse
15 Befestigungsmittel
151 Köpfe der Befestigungsmittel
16 Kühlstrukturen
17 erster luftgefüllter Isolationsraum
18 zweiter luftgefüllter Isolationsraum
19 Gaseintrittsgehäuse
191 Gaseinströmungskanal
20 Düsenring
21 Tragring
200 Verfahren zur Wärmeeintragsreduktion und Abfuhr von eingebrachter Wärme
210, 220 Blöcke des Blockdiagrams zur Veranschaulichung von Verfahrensschritten
x axiale Richtung
r radiale Richtung
Rₘᵢₙ minimaler Radius der Turbinenradrückwand

## Patentansprüche

1. Turbomaschine (10), insbesondere Abgasturbine, umfassend:
- eine in einem Lagergehäuse (11) gelagerte Welle (12), auf der ein Turbinenrad (13) angeordnet ist,
- ein Hitzeschild (14), welches zwischen dem Lagergehäuse (11) und dem Turbinenrad (13) angeordnet ist,
wobei das Hitzeschild (14) über mehrere Befestigungsmittel (15) an dem Lagergehäuse befestigt ist, und wobei sich die Befestigungsmittel (15) in Kühlstrukturen (16) erstrecken, die in einem Ölkühlraum (111) des Lagergehäuses (11) angeordnet sind.

2. Turbomaschine (10) gemäß Anspruch 1, wobei die Kühlstrukturen (16) Stege, insbesondere axiale Stege, sind, die in dem Ölkühlraum (111) angeordnet sind.

3. Turbomaschine (10) gemäß Anspruch 1 oder 2, wobei die Kühl strukturen (16) mit einer turbinenseitigen Lagergehäusewand (112) verbunden, insbesondere integral ausgebildet, sind, und wobei sich die Befestigungsmittel (15) durch die turbinenseitigen Lagergehäusewand (112) kontaktfrei erstrecken.

4. Turbomaschine (10) gemäß Anspruch 3, wobei die turbinenseitige Lagergehäusewand (112) gewindefreie Befestigungsmittelaufnahmen (113), insbesondere Bohrungen, aufweist, durch die sich die Befestigungsmittel kontaktfrei erstrecken, und insbesondere wobei die Befestigungsmittelaufnahmen turbinenseitige Senkungen (114), insbesondere Kegelsenkungen, aufweisen.

5. Turbomaschine (10) gemäß einem der Ansprüche 1 bis 4, wobei die Befestigungsmittel (15) Schrauben sind, die mit in den Kühlstrukturen (16) vorgesehenen Innengewinden in Eingriff stehen.

6. Turbomaschine (10) gemäß einem der Ansprüche 1 bis 5, wobei die Befestigungsmittel (15) zwischen Turbinenrad (13) und Lagergehäuse (11) angeordnet sind, insbesondere wobei die Befestigungsmittel (15) radial innerhalb eines minimalen Radius (Rₘᵢₙ) einer Turbinenradrückwand des Turbinenrads 13 angeordnet sind.

7. Turbomaschine (10) gemäß einem der Ansprüche 1 bis 6, wobei zwischen einem radial äußeren axialem Kontakt (142) des Hitzeschilds (14) mit dem Lagergehäuse (11) und einem radial inneren axialem Kontakt (143) des Hitzeschilds (14) mit dem Lagergehäuse (11) ein erster luftgefüllter Isolationsraum (17) bereitgestellt wird, insbesondere wobei der radial innere axiale Kontakt (143) im Bereich der Befestigungsmittel (15) angeordnet ist.

8. Turbomaschine (10) gemäß einem der Ansprüche 1 bis 7, wobei zwischen einem radial inneren axialem Kontakt (143) im Bereich der Befestigungsmittel (15) mit dem Lagergehäuse (11) und einem radialem Kontakt (144) einer zentralen Öffnung (141) des Hitzeschilds (14) mit dem Lagergehäuse (11) ein zweiter luftgefüllter Isolationsraum (18) bereitgestellt wird.

9. Turbomaschine (10) gemäß einem der Ansprüche 1 bis 8, wobei das Hitzeschild (14) lagergehäuseseitig mehrere freigestellte Befestigungskontakteflächen (145) umfasst, die um jeweilige Befestigungsmitteldurchgangsbohrungen (146) des Hitzeschilds herum angeordnet sind, so dass in Umfangsrichtung zwischen benachbarten Befestigungskontakteflächen (145) ein luftgefüllter Isolationsraum bereitgestellt wird.

10. Turbomaschine (10) gemäß einem der Ansprüche 1 bis 9, wobei das Hitzeschild (14) konfiguriert ist, um eine rotationssymmetrische radial äußere Vorspannungskontaktzone bereitzustellen, insbesondere wobei die Vorspannungskontaktzone durch den radial äußeren axialen Kontakt (142) gemäß Anspruch 7 bereitgestellt wird.

11. Turbomaschine (10) gemäß einem der Ansprüche 1 bis 9, wobei das Hitzeschild (14) turbinenseitig für Köpfe (151) der mehreren Befestigungsmittel (15), insbesondere Schraubenköpfe, jeweilige Senkungen (147) aufweist.

12. Turbomaschine (10) gemäß einem der Ansprüche 1 bis 11, wobei das Lagergehäuse (11) eine Fase (115) aufweist, die einem lagergehäuseseitigen radial äußeren axialem Rand des Hitzeschilds (14) zugewandt ist, und/oder wobei der lagergehäuseseitigen radial äußere axiale Rand des Hitzeschilds (14) eine Fase aufweist.

13. Turbomaschine (10) gemäß einem der Ansprüche 1 bis 12, wobei die Turbomaschine eine Radialturbine ist und ferner ein Gaseintrittsgehäuse (19) mit einem radial angeordneten Gaseinströmungskanal (191) umfasst, in welchem ein Düsenring (20) angeordnet ist, und wobei ein Tragring (21) des Düsenringes(20) radial außerhalb des Hitzeschilds (14) angeordnet ist.

14. Verfahren zur Wärmeeintragsreduktion und Abfuhr von eingebrachter Wärme von einer Turbinenseite in ein Lagergehäuse (11) einer Turbomaschine (10), insbesondere einer Abgasturbine, umfassend:
- thermisches Abschirmen des Lagergehäuses (11) gegenüber der Turbinenseite mittels eines Hitzeschilds (14), das zwischen dem Lagergehäuse (11) und einem Turbinenrad (13) angeordnet ist, und
- Abführen von Wärme über mehrere Befestigungsmittel (15) mit welchen das Hitzeschild (14) an dem Lagergehäuse befestigt ist, wobei sich die Befestigungsmittel (15) in Kühlstrukturen (16) erstrecken, die in einem Ölkühlraum (111) des Lagergehäuses (11) angeordnet sind.

15. Verfahren nach Anspruch 14, wobei die Turbomaschine eine Turbomaschine gemäß einem der Ansprüche 1 bis 13 ist.
